**Europäisches Patentamt**

**European Patent Office**

**Office européen des brevets**

(19)

(11) Veröffentlichungsnummer: **0 038 946**

**B1**

(12) **EUROPÄISCHE PATENTSCHRIFT**

(45) Veröffentlichungstag der Patentschrift:
13.08.86

(51) Int. Cl.⁴: **H 01 G 1/02**

(21) Anmeldenummer: **81102412.4**

(22) Anmeldetag: **31.03.81**

(54) Elektrischer Kondensator.

(30) Priorität: **25.04.80 DE 8011344 U**

(43) Veröffentlichungstag der Anmeldung:
**04.11.81 Patentblatt 81/44**

(45) Bekanntmachung des Hinweises auf die Patenterteilung:
**13.08.86 Patentblatt 86/33**

(84) Benannte Vertragsstaaten:
**AT CH DE FR GB IT LI SE**

(56) Entgegenhaltungen:
**FR-A-883 573**
**FR-A-1 143 821**
**FR-A-1 218 732**
**FR-E-81 148**
**NL-A-6 604 242**
**US-A-3 214 300**

(73) Patentinhaber: **ROBERT BOSCH GMBH, Postfach 50, D-7000 Stuttgart 1 (DE)**

(72) Erfinder: **Becher, Joachim, Ulmenstrasse 25, D-7052 Schwaikheim (DE)**
Erfinder: **Förster, Herbert, Dipl.- Phys., Grundackerweg 38, D-7060 Schorndorf (DE)**
Erfinder: **Frankenreiter, Rolf, Pfahlbühlstrasse 71, D-7056 Weinstadt 3 (DE)**
Erfinder: **Hermann, Nikolaus, Cottastrasse 64, D-7000 Stuttgart (DE)**
Erfinder: **Klaiber, Reinhold, Alosenweg 68, D-7000 Suttgart 61 (DE)**

## Beschreibung

### Stand der Technik

Die Erfindung geht aus von einem elektrischen Kondensator nach der Gattung des Hauptanspruches. Ein derartiger Kondensator ist beispielsweise aus der FR-A 1 143 821 bekanntgeworden. Diese Druckschrift zeigt einen elektrischen Kondensator mit einem Isolierstoffteil im Bereich der Gehäuseöffnung, welches das Kondensatorelement in einem becherförmigen Gehäuse zentriert. Bei dieser bekannten Ausführungsform ist der Raum zwischen einer Isolierstoffhülle innerhalb des Gehäuses und dem Kondensatorwickel mit einer Isolierflüssigkeit ausgefüllt.

Aus der US-A 3 214 300 ist eine wiederaufladbare elektrische Zelle bekannt, deren Rundwickel mittels eines den Gehäuserand übergreifenden Isolierstoffteils im Bereich der Gehäuseöffnung zentriert ist. Weiterhin ist es aus der FR-A 1 218 732 bekannt, ein becherförmiges Gehäuse für einen Elektrolytkondensator durch einen Isolierstoffdeckel zu verschließen, wobei der obere Gehäusebereich im Bereich des Deckels durch einen Verguß mit Kunststoff abgedichtet ist. Das Isolierstoff-Deckelteil weist hierbei Aussparungen für den Durchtritt von flüssigem Kunststoff auf.

### Vorteile der Erfindung

Der erfindungsgemäße elektrische Kondensator mit den kennzeichnenden Merkmalen des Hauptanspruches hat demgegenüber den Vorteil, daß mit einem Minimum an Einbauteilen eine mechanisch und funktionell sichere Halterung und Isolierung des Kondensatorelementes erreicht wird. Die Einbauteile können universell für alle Anschlußarten verwendet werden, wodurch sich größere Stückzahlen an benötigten Einzelteilen ergeben. Die vorschlagene Einbauart läßt weiterhin wahlweise die Verwendung von Flachstecker- oder Lötfahnenanschlüssen zu und ist sowohl für Metallgehäuse wie auch für Kunststoffgehäuse verwendbar. Die elektrische Isolation ist in jedem Fall gewährleistet; insbesondere ist sichergestellt, daß die erforderlichen Kriechwege zwischen den auf verschiedenen Potentialen liegenden Teilen eingehalten werden.

### Zeichnung

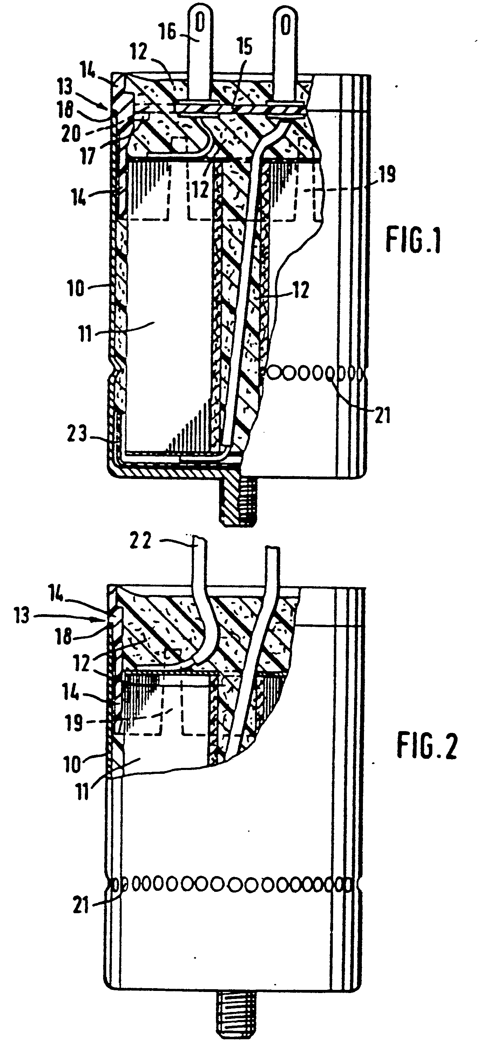

Zwei Ausführungsbeispiele sind in der Zeichnung dargestellt und in der nachfolgenden Beschreibung näher erläutert. Es zeigen Fig. 1 ein erstes Ausführungsbeispiel mit Flachsteckeranschluß und Fig. 2 ein zweites Ausführungsbeispiel mit Drahtanschlüssen.

### Beschreibung der Ausführungsbeispiele

Fig. 1 zeigt einen elektrischen Kondensator mit einem becherförmigen Metallgehäuse 10 aus Aluminium, in das ein Kondensatorelement in Form eines Rundwickels 11 eingesetzt ist. Das Kondensatorelement besteht aus metallbedampften Papier- und/oder Kunststoffbändern und bildet somit einen selbstheilenden Kondensator.

Der nicht vom Wickel 11 ausgefüllte Raum innerhalb des Gehäuses 10 ist mit einer Gießharzmasse 12 ausgefüllt. Diese Gießharzmasse sichert einerseits die mechanische Halterung der verschiedenen Teile und bietet andererseits einen idealen Schutz gegen das Eindringen von Feuchtigkeit sowie gegen Kurzschlüsse von auf unterschiedlichen Potentialen liegenden Teilen des Kondensators. Entlang der Gehäuseöffnung 13 ist ein rohrförmiges Isolierstoffteil 14 angeordnet, welches einerseits über das Gehäuse 10 vorsteht und andererseits in den Bereich zwischen dem Gehäuse 10 und dem Wickel 11 hineinreicht und somit den Wickel 11 innerhalb des Gehäuses zentriert.

Bei der in Fig. 1 gezeigten Ausführungsform ist das Gehäuse 10 nach dem Einsetzen des Wickels 11 vollständig mit Gießharz 12 ausgefüllt. Stattdessen wäre es jedoch auch möglich, nur den Bereich der Gehäuse-Öffnung mit Gießharz zu verschließen.

Das Isolierstoffteil kann zweiteilig ausgebildet sein und aus einem rohrförmigen Isolierstoffteil 14 sowie einem von diesem gehaltenen Deckelteil 15 bestehen. Wenn das Deckelteil dicht in das rohrförmige Isolierstoffteil eingepaßt ist und auch vorhandene Anschlußfahnen 16 dicht in das Deckelteil 15 eingepaßt sind, kann ein Verguß des Kondensators nur im Bereich oberhalb des Deckelteils 15 erfolgen. Je nach Anwendungsfall ist diese Vergußart ausreichend zur mechanischen und elektrischen Fixierung der Gesamtanordnung.

Das Deckelteil 15 liegt bei der Anordnung gemäß Fig. 1 auf stufenartigen Vorsprüngen 17 an dem rohrförmigen Isolierstoffteil 14 auf. Letzeres ist dicht in das Kondensatorgehäuse 10 eingepaßt und liegt mit einem Anschlag 18 an der Kante des Gehäuses 10 an. Das Deckelteil 15 und das rohrförmige Isolierstoffteil 14 weisen jeweils Aussparungen 19 und 20 auf für den Durchtritt von Gießharz 12 beim Füllen des Gehäuses. Das rohrförmige Isolierstoffteil 14 ist hinsichtlich seines Durchmessers derart bemessen, daß ein Preßsitz zwischen dem Gehäuse 10, dem rohrförmigen Isolierteil 14 und dem Deckelteil 15 entsteht. Statt der Vergrößerung der Wandstärke des rohrförmigen Isolierstoffteils 14 wäre es jedoch auch möglich, den Durchmesser des Deckelteils 15 zu vergrößern.

Die Isolierstoffformteile 14 und 15 bestehen vorzugsweise aus Thermoplast. Zur Sicherung des Gießharzblockes 11, 12 ist eine umlaufende Sicklochreihe 21 vorgesehen, welche ein

2

Verdrehen und axiales Verschieben des Harzblockes 12 innerhalb des Gehäuses verhindert. Eine weitere Sicherung gegen ein Verdrehen und axiales Verschieben kann im Bereich der Gehäuseöffnung vorgesehen werden, indem das Gehäuse 10 und/oder das rohrförmige Isolierstoffteil 14 und/oder das Deckelteil 15 formschlüssig miteinander verbunden sind.

Die Anordnung gemäß Fig. 2 entspricht weitgehend der Anordnung gemäß Fig. 1; anstelle von Anschlußfahnen sind jedoch bei dieser Ausführung Anschlußdrähte 22 von den Wickelstirnflächen des Kondensatorelementes nach außen herausgeführt. Das Deckelteil 15 ist nicht vorgesehen und bei dieser Ausführungsform ohne mechanisch zu befestigende Anschlußfahnen auch nicht erforderlich. Das rohrförmige Isolierstoffteil 14 kann in gleicher Ausbildung und gleicher Anordnung wie bei Fig. 1 verwendet werden. Die Gesamtanordnung ist wiederum mit Gießharz 12 bis zum oberen Rand des rohrförmigen Isolierstoffteils 14 gefüllt.

Durch die vorgeschlagene Lösung erzielt man eine kostengünstige Anordnung für die an der Durchführungsöffnung des Kondensators notwendige Isolierung der Anschlüsse 16 und des Wickels 11, insbesondere gegen ein Metallgehäuse 10. Weiterhin ist die Anordnung in gleicher Weise geeignet für die Befestigung der äußeren Kondensatoranschlüsse bei Anordnungen mit teilweisem, z. B. nur im Bereich des Deckelteils, oder vollständigem Gießharzverguß. Die vorgeschlagene Anordnung ist universell verwendbar, wahlweise für Kondensatoren mit Metallgehäuse oder Kunststoffgehäuse, wobei es gleichgültig ist, ob steck- oder lötbare Anschlüsse oder Kabelanschlüsse vorgesehen sind.

Das Isolierstoffteil ist zweckmäßigerweise in zwei Einzelteile 14 und 15 unterteilt, welche gemeinsam zur Befestigung von Anschlußfahnen oder dergleichen verwendbar sind. Wenn ein Vollverguß vorgesehen ist und kein Tragkörper für Anschlußfahnen erforderlich ist, kann das Deckelteil 15 entfallen. Die Teile 14 und 15 sind zweckmäßigerweise Spritzteile oder Preßteile aus thermoplastischem, unter Umständen aber auch aus duroplastischem Isolierstoff. Als Isolierstoffe eigenen sich vorzugsweise Polyamid, Polyäthylenterephthalat, Copolymerisate aus Polyphenylenoxid mit Polyacrylnitrid oder mit Polystyrol oder Phenolharz, mit oder ohne Füllstoffe. Das Deckelteil 15 wird zur Befestigung von steck- oder lötbaren Anschlußfahnen zusätzlich verwendet. Es kann auch aus stanzbarem, plattenförmigem Isoliermaterial hergestellt sein. Soll das Deckelteil 15 für einen Kondensator mit Vollverguß verwendet werden, dann sind entsprechende Aussparungen 20 vorgesehen. Die Harzfüllung erfolgt bis zur Oberkante des rohrförmigen Isolierstoffteils 14. Wird lediglich ein sogenannter Deckverguß oberhalb des Deckelteils 15 ausgeführt, dann ist dieser Teil mit Durchführungen und Berandung so abgedichtet, daß kein Harz in den unteren Raum

einfliessen kann. Beide Isolierstoffteile 14 und 15 sind derart ausgebildet, daß das gleiche Deckelteil 15 auch für ein Kunststoffgehäuse 10 mit gleichen Außenabmessungen wie ein entsprechendes Metallgehäuse verwendet werden kann, wobei auf das Isolierstoffteil 14 verzichtet werden kann.

In Weiterbildung der vorgeschlagenen Lösung können an der Innenwand vorstehende Längsrippen als Abstandshalter zum Wickel vorgesehen sein, um einen Harzeinfluß zwischen Wickelmantel und Gehäusewand zu gewährleisten. An der Außenwand des rohrförmigen Isolierstoffteils 14 können Vertiefungen vorgesehen sein zur Verankerung des Metallgehäuses 10 mit dem Isolierstoffteil 14, um eine Verdrehung des Gehäuses gegenüber dem Wickel 11 zu verhindern.

Durch den Anschlag 18 an der Oberkante des Gehäuses 10 und am Isolierstoffteil 14 erhält man eine Begrenzung der Einstecktiefe des rohrförmigen Isolierstoffteils 14. Wenn der obere Teil des rohrförmigen Isolierstoffteils im Durchmesser größer gehalten ist als sein unterer Teil, so ergibt sich ein Preßsitz zwischen dem Isolierstoffteil 14 und dem Gehäuse 10, so daß das vor dem Aushärten noch flüssige Gießharz an dieser Stelle nicht austreten kann. Der Innendurchmesser des rohrförmigen Isolierstoffteils 14 ist so bemessen, daß der Wickel 11 nach dem Eindrücken des Kunststoffteils in das Gehäuse eingeschoben werden kann. Im unteren Bereich des Gehäuses 10 ist bei 21 eine umlaufende Sicklochreihe vorgesehen, welche verhindert, daß sich der Block aus Rundwickel 11 und Gießharzverguß 12 bei eventuell ungenügender Verbindung mit dem Gehäuse verschieben oder verdrehen kann. Die Sicklochreihe kann auch durch eine Rändelsicke ersetzt werden; sie ist so gestaltet, daß sich eine untere Isolierstoffkappe 23 nach dem Einprägen der Sicken eindrücken läßt.

**Patentansprüche**

1. Elektrischer Kondensator mit einem becherförmigen Gehäuse, das wenigstens teilweise mit Kunststoff ausgefüllt ist und in das ein Kondensatorelement, inbesondere ein Rundwickel aus metallisierten Papier- und/oder Kunststoffbändern, eingesetzt und gegenüber dem Gehäuse isoliert gehalten ist, welches im Bereich der Gehäuseöffnung ein Isolierstoffteil trägt, das nach innen in das Gehäuse hineinreicht zur Zentrierung der Kondensatorelementes, dadurch gekennzeichnet, daß das Isolierstoffteil (14, 15) den Gehäuserand (13) übergreift, nach außen über das Gehäuse (10) übersteht und Aussparungen (19, 20) für den Durchtritt von Gießharz (12) aufweist.

2. Kondensator nach Anspruch 1, dadurch gekennzeichnet, daß das Gehäuse (10) vollständig mit Gießharz gefüllt ist.

3. Kondensator nach Anspruch 1, dadurch gekennzeichnet, daß das Isolierstoffteil (14, 15) zweiteilig ausgebildet ist und aus einem rohrförmigen Isolierstoffteil (14) sowie einem von diesem gehaltenen Deckelteil (15) besteht.

4. Kondensator nach Anspruch 3, dadurch gekennzeichnet, daß das Deckelteil (15) die Kondensatoranschlüsse (16) trägt.

5. Kondensator nach Anspruch 3 oder 4, dadurch gekennzeichnet, daß nur der Gehäusebereich oberhalb des Deckelteils (15) mit Gießharz (12) ausgefüllt ist.

6. Kondensator nach einem der vorhergehenden Ansprüche, dadurch gekennzeichnet, daß das rohrförmige Isolierstoffteil (14) dicht in das Kondensatorgehäuse (10) eingepreßt ist.

7. Kondensator nach einem der vorhergehenden Ansprüche, dadurch gekennzeichnet, daß das Gehäuse (10) aus Metall, vorzugsweise aus Aluminium besteht.

8. Kondensator nach einem der Ansprüche 1 bis 6, dadurch gekennzeichnet, daß das Gehäuse (10) aus Kunststoff besteht.

9. Kondensator nach einem der vorhergehenden Ansprüche, dadurch gekennzeichnet, daß das rohrförmige Isolierstoffteil (14) mit einem Anschlag (18) an der Kante des Gehäuses (10) anliegt.

10. Kondensator nach einem der vorhergehenden Ansprüche, dadurch gekennzeichnet, daß die Isolierstoffteile (14, 15) aus Thermoplast bestehen.

11. Kondensator nach einem der Ansprüche 3 bis 11, dadurch gekennzeichnet, daß das rohrförmige Isolierstoffteil (14) und/oder das Deckelteil (15) derart bemessen sind, daß ein Preßsitz zwischen dem Gehäuse (10), dem rohrförmigen Isolierstoffteil (14) und dem Deckelteil (15) entsteht.

12. Kondensator nach einem der vorhergehenden Ansprüche, dadurch gekennzeichnet, daß der Gießharzblock durch eine umlaufende Sicklochreihe (21) gegen Verdrehen im Gehäuse (10) gesichert ist.

13. Kondensator nach einem der vorhergehenden Ansprüche, dadurch gekennzeichnet, daß das Gehäuse (10) und/oder das rohrförmige Isolierstoffteil (4) und/oder das Deckelteil (15) und/oder der Gießharzblock (12) mit dem KO-Wickel (11) verdrehsicher miteinander verbunden sind.

## Claims

1. Electrical capacitor with a cup-shaped housing which is at least partially filled with plastic material and into which a capacitor component, in particular a cylindrical reel of metallized paper and/or plastic-material tapes, is inserted and held in an insulated manner with respect to the housing which carries a part of insulating material, which extends inwards into the housing to centre the capacitor component, in the region of the housing opening, characterized in that the part (14, 15) of insulating material engages over the edge of the housing (13), projects outwards over the housing (10) and has cut-outs (19, 20) for the penetration of casting resin (12).

2. Capacitor according to Claim 1, characterized in that the housing (10) is completely filled with casting resin.

3. Capacitor according to Claim 1, characterized in that the part (14, 15) of insulating material is constructed as two parts and consists of a tubular part (14) of insulating material and also of a cover part (15) held by the latter.

4. Capacitor according to Claim 3, characterized in that the cover part (15) carries the capacitor connections (16).

5. Capacitor according to Claim 3 or 4, characterized in that only the housing region above the cover part (15) is filled with casting resin (12).

6. Capacitor according to one of the preceding claims, characterized in that the tubular part (14) of insulating material is pressed in a tight-fitting manner into the capacitor housing (10)

7. Capacitor according to one of the preceding claims, characterized in that the housing (10) consists of metal, preferably of aluminium.

8. Capacitor according to one of the Claims 1 to 6, characterized in that the housing (10) consists of plastic material.

9. Capacitor according to one of the preceding claims, characterized in that a stop (18) on the tubular part (14) of insulating material is up against the rim of the housing (10).

10. Capacitor according to one of the preceding claims, characterized in that the parts (14, 15) of insulating material consist of a thermoplastic.

11. Capacitor according to one of the Claims 3 to 11, characterized in that the tubular part of (14) insulating material and/or the cover part (15) are dimensioned in a manner such that a press seating is produced between the housing (10), the tubular part (14) of insulating material and the cover part (15).

12. Capacitor according to one of the preceding claims, characterized in that the block of casting resin is secured against twisting in the housing (10) by a circumferential row of crimped holes (21).

13. Capacitor according to one of the preceding claims, characterized in that the housing (10) and/or the tubular part (14) of insulating material and/or the cover part (15) and/or the block of casting resin (12) together with the capacitor reel (11) are joined to one another in a twist-proof manner.

## Revendications

1.) Condensateur électrique comportant un boîtier en forme de gobelet au moins partiellement rempli de matière synthétique et qui reçoit un élément-condensateur notamment un enroulement circulaire en forme de bande de papier et/ou de matière synthétique métallisée et maintenu isolé par rapport au boitier, et qui comporte au niveau de l'ouverture du boitier une partie de matière isolante venant a l'intérieur dans le boitier pour centrer l'élément de condensateur, caractérisé en ce que la partie isolante (14, 15) déborde du bord (13) et est en saillie par rapport au boitier (10) et comporte des cavités (19, 20) pour laisser passer la résine coulée (12).

2.) Condensateur selon la revendication 1, caractérisé en ce que le boitier (10) est complétement rempli de résine.

3.) Condensateur selon la revendication 1, caractérise en ce que la partie en matière isolante (14, 15) est réalisée en deux parties et se compose d'une partie en matière isolante tubulaire (14) ainsi que d'une partie de couvercle (15) reliée à la précédente.

4.) Condensateur selon la revendication 3, caractérisé en ce que la partie de couvercle (15) porte les raccords de condensateur (16).

5.) Condensateur selon la revendication 3 ou 4, caractérisé en ce que seule la zone du boîtier au-dessus de la partie de couvercle (15) est remplie de résine coulée (12).

6.) Condensateur selon l'une des revendications précédentes, caractérisé en ce que la partie isolante tubulaire (14) est pressée étroitement dans le boîtier de condensateur (10).

7.) Condensateur selon l'une des revendications précédentes, caractérisé en ce que le boîtier (10) est en métal de préférence en aluminium.

8') Condensateur selon l'une des revendications 1 à 6, caractérisé en ce que le boîtier (10) est en matière synthétique.

9.) Condensateur selon l'une des revendications précédentes, caractérisé en ce que la partie en matière isolante (14), tubulaire, s'appuie par une butée (18) contre l'arête du boîtier (10).

10.) Condensateur selon l'une des revendications précédentes, caractérisé en ce que les parties en matière isolante (14, 15) sont en matière thermoplastique.

11.) Condensateur selon l'une des revendications 1 à 11, caractérisé en ce que la partie isolante tubulaire (14) et/ou la partie de couvercle (15) sont dimensionnées pour obtenir un siège pressé entre le boîtier (10) et la partie isolante tubulaire (14) ainsi que la partie de couvercle (15).

12.) Condensateur selon l'une des revendications précédentes, caractérisé en ce que le bloc en résine coulée est garanti par une rangée périphérique de cavités (21) assurant le blocage en rotation par rapport au boîtier (10).

13.) Condensateur selon l'une des revendications précédentes, caractérisé en ce que le boîtier (10) et/ou la partie isolante tubulaire (14) et/ou la partie de couvercle (15) et/ou le bloc de résine coulée (12) sont reliés à l'enroulement de condensateur (11) de façon solidaire en rotation.

0 038 946

FIG.1

FIG.2